# EUROPEAN PATENT APPLICATION

(11) **EP 4 462 751 A1**
(43) Date of publication of application: **13.11.2024**
(21) Application number: 22923421.6
(22) Date of filing: 21.11.2022
(51) Int. Cl.: H04L 47/32, H04W 56/00

(54) **MULTI-STREAM SYNCHRONIZATION METHOD AND DEVICE**

(30) Priority: 30.01.2022 CN 202210114432
(71) Applicant: Huawei Technologies Co., Ltd., Shenzhen, Guangdong 518129 (CN)
(72) Inventor: JIANG, Chengkun, Shenzhen, Guangdong 518129 (CN); ZHOU, Han, Shenzhen, Guangdong 518129 (CN)
(74) Representative: Pfenning, Meinig & Partner mbB
(86) International application number: PCT/CN2022/133085
(87) International publication number: WO 2023/142627

(57) **Abstract**

Embodiments of this application provide a multiflow synchronization method and an apparatus. The method includes: A first network element obtains multiflow information and a first preset value, where the multiflow information includes a first period, and the first network element is a radio access network device or a user plane function device; and in the first period, if the first network element determines that an actual arrival time of a first data packet in a plurality of data flows is later than the first preset value, the first network element discards a data packet received in the first period. According to this application, an exception of a data packet can be quickly fed back, signaling overheads caused when the first network element sends, to a receive end device in the first period, a plurality of data packets for which multiflow synchronization is not implemented can be avoided, and storage resources of the receive end device can be saved.

## Description

This application claims priority to Chinese Patent Application No. 202210114432.X, filed with the China National Intellectual Property Administration on January 30, 2022 and entitled "MULTIFLOW SYNCHRONIZATION METHOD AND APPARATUS", which is incorporated herein by reference in its entirety.

### TECHNICAL FIELD

This application relates to the communication field, and more specifically, to a multiflow synchronization method and an apparatus.

### BACKGROUND

In some application scenarios, for example, in many application scenarios of a 5th generation mobile communication system (the 5th generation mobile communication system, 5GS), a same service generates a plurality of mutually associated data flows. For example, in an augmented reality (augmented reality, AR) application, a background in an AR image generates a data flow, and a virtual picture of a foreground added by the AR also generates a data flow. For another example, in high-definition 360-degree panoramic video transmission, a 360-degree video frame is split into different parts, and each part generates a data flow. For a same service, multiflow synchronization may not be implemented for a part of data flows in a plurality of data flows, and consequently, the service may not run normally. This affects normal use of a user and wastes network bandwidth.

In the conventional technology, multiflow synchronization of a same service is implemented at a receive end device. Specifically, after receiving data packets of a part of data flows, the receive end device first buffers the data packets of the part of data flows, and after data packets of all data flows are received, the service can run normally. However, in this manner, a large quantity of storage resources of the receive end device need to be consumed, and an exception such as a packet loss or congestion of the data flow may not be quickly fed back.

### SUMMARY

This application provides a multiflow synchronization method and an apparatus, to reduce consumption of storage resources of a receive end device, and quickly feed back an exception such as a packet loss or congestion of a data flow.

According to a first aspect, a multiflow synchronization method is provided. The method may be performed by a first network element, or may be performed by a component (for example, a chip or a circuit) of the first network element. This is not limited herein. For ease of description, the following uses an example in which the first network element is used for description.

The method may include: A first network element obtains multiflow information and a first preset value, where the multiflow information includes a first period, and the first network element is a radio access network device or a user plane function device; and in the first period, if the first network element determines that an actual arrival time of a first data packet in a plurality of data flows is later than the first preset value, the first network element discards a data packet received in the first period.

Based on the foregoing technical solution, the first network element (for example, a radio access network device or a user plane function device) may discard, based on data packet transmission, a plurality of data packets that are received in the first period and for which multiflow synchronization cannot be implemented. For example, if the actual arrival time of the first data packet in the plurality of data flows is later than the first preset value, the first network element discards a data packet received in the first period. In this manner, not only an exception of a data packet can be quickly fed back, for example, a response to a packet loss can be made more quickly, but also signaling overheads caused when the first network element sends a plurality of data packets for which multiflow synchronization is not implemented to the receive end device in the first period. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

With reference to the first aspect, in some implementations of the first aspect, in response to that the first network element determines that the actual arrival time of the first data packet in the plurality of data flows is later than the first preset value, the first network element sends indication information to a transmit end device, where the indication information indicates to retransmit a data packet in each data flow in the plurality of data flows.

Based on the foregoing technical solution, when determining that multiflow synchronization cannot be implemented for the plurality of data packets in the first period, the first network element may request the transmit end device to retransmit the data packet in each data flow in the plurality of data flows, to respond to a packet loss more quickly.

With reference to the first aspect, in some implementations of the first aspect, that the first network element sends indication information to a transmit end device includes: The first network element generates an acknowledgment data packet; and the first network element sends the acknowledgment data packet to the transmit end device, where the acknowledgment data packet is used to indicate to retransmit the data packet in each data flow in the plurality of data flows.

With reference to the first aspect, in some implementations of the first aspect, the first network element determines that the actual arrival time of the first data packet is earlier than or equal to the first preset value, and the first network element buffers the first data packet.

With reference to the first aspect, in some implementations of the first aspect, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

With reference to the first aspect, in some implementations of the first aspect, the multiflow information further includes a size of the data packet in each data flow in the plurality of data flows and a predetermined arrival time of the data packet in each data flow in the plurality of data flows. Before that the first network element determines the actual arrival time of the first data packet in the plurality of data flows, the method further includes: The first network element pre-allocates a resource to the data packet in each data flow in the plurality of data flows based on the multiflow information.

With reference to the first aspect, in some implementations of the first aspect, that a first network element obtains multiflow information includes: The first network element obtains the multiflow information from any one or more of the following: a control plane network element, the user plane function device, and the radio access network device.

According to a second aspect, a multiflow synchronization method is provided, including: A first network element obtains multiflow information and a first preset value, where the multiflow information includes a first period, and the first network element is a radio access network device or a user plane function device; and in the first period, if the first network element determines that an actual arrival time of a first data packet in a plurality of data flows is later than the first preset value, the first network element sends indication information to a transmit end device, where the indication information indicates to retransmit a data packet in each data flow in the plurality of data flows.

Based on the foregoing technical solution, when determining that multiflow synchronization cannot be implemented for the plurality of data packets in the first period, the first network element (for example, a radio access network device or a user plane function device) may request the transmit end device to retransmit the data packet in each data flow in the plurality of data flows. For example, if the actual arrival time of the first data packet in the plurality of data flows is later than the first preset value, the first network element sends the indication information to the transmit end device, where the indication information indicates to retransmit the data packet in each data flow in the plurality of data flows. In this manner, an exception of a data packet can be quickly fed back, for example, a response to a packet loss can be made more quickly. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

With reference to the second aspect, in some implementations of the second aspect, that the first network element sends indication information to a transmit end device includes: The first network element generates an acknowledgment data packet; and the first network element sends the acknowledgment data packet to the transmit end device, where the acknowledgment data packet is used to indicate to retransmit the data packet in each data flow in the plurality of data flows.

With reference to the second aspect, in some implementations of the second aspect, the first network element determines that the actual arrival time of the first data packet is earlier than or equal to the first preset value, and the first network element buffers the first data packet.

With reference to the second aspect, in some implementations of the second aspect, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

With reference to the second aspect, in some implementations of the second aspect, the multiflow information further includes a size of the data packet in each data flow in the plurality of data flows and a predetermined arrival time of the data packet in each data flow in the plurality of data flows. Before that the first network element determines the actual arrival time of the first data packet in the plurality of data flows, the method further includes: The first network element pre-allocates a resource to the data packet in each data flow in the plurality of data flows based on the multiflow information.

With reference to the second aspect, in some implementations of the second aspect, that a first network element obtains multiflow information includes: The first network element obtains the multiflow information from any one or more of the following: a control plane network element, the user plane function device, and the radio access network device.

According to a third aspect, a multiflow synchronization method is provided, including: A control plane network element determines a first rule, where the first rule is a sum of an actual arrival time of a data packet in at least one of a plurality of data flows and a preset time interval between arrival times of two data packets in the plurality of data flows; and the control plane network element sends the first rule to a first network element, where the first network element is a radio access network device or a user plane function device.

Based on the foregoing technical solution, the control plane network element may send the determined first rule to the first network element (for example, the radio access network device or the user plane function device), so that the first network element can determine, by using the first rule sent by the control plane network element, whether multiflow synchronization can be implemented for a data packet in each of the plurality of data flows, and the first network element can quickly feed back an exception of the data packet, for example, respond to a packet loss more quickly. In addition, compared with multiflow synchronization determining performed by a receive end device for a plurality of data packets, based on the foregoing technical solution, the first network element determines multiflow synchronization based on the first rule sent by the control plane network element, so that storage resources of the receive end device can be saved, thereby reducing a waste of storage resources at the receive end.

With reference to the third aspect, in some implementations of the third aspect, the control plane network element obtains multiflow information, where the multiflow information includes one or more of the following information: a first period, a size of a data packet in each data flow in the plurality of data flows, a predetermined arrival time of the data packet in each data flow in the plurality of data flows, and a preset time interval between arrival times of two data packets in the plurality of data flows. That the control plane network element determines a first rule includes: The control plane network element determines the first rule based on the multiflow information.

With reference to the third aspect, in some implementations of the third aspect, that the control plane network element sends the multiflow information to a first network element includes: The control plane network element determines a maximum value of a size of the data packet in each data flow in the first period; and when the maximum value is less than or equal to a size of a resource of the first network element, the control plane network element sends the multiflow information to the first network element.

With reference to the third aspect, in some implementations of the third aspect, that the control plane network element obtains multiflow information includes: The control plane network element obtains the multiflow information from any one or more of the following: the application function device, the radio access network device, and the user plane function device.

According to a fourth aspect, a communication apparatus is provided, including a transceiver unit and a processing unit. The transceiver unit is configured to obtain multiflow information and a first preset value, the multiflow information includes a first period, and the apparatus is a radio access network device or a user plane function device. In the first period, if the processing unit is configured to determine that an actual arrival time of a first data packet in a plurality of data flows is later than the first preset value, the transceiver unit is configured to discard a data packet received in the first period.

With reference to the fourth aspect, in some implementations of the fourth aspect, the apparatus further includes: in response to that the processing unit determines that the actual arrival time of the first data packet in the plurality of data flows is later than the first preset value, the transceiver unit is configured to send indication information to a transmit end device, where the indication information indicates to retransmit a data packet in each data flow in the plurality of data flows.

With reference to the fourth aspect, in some implementations of the fourth aspect, that the transceiver unit is configured to send indication information to a transmit end device includes: The processing unit is configured to generate an acknowledgment data packet; and the transceiver unit is configured to send the acknowledgment data packet to the transmit end device, where the acknowledgment data packet is used to indicate to retransmit the data packet in each data flow in the plurality of data flows.

With reference to the fourth aspect, in some implementations of the fourth aspect, the apparatus further includes: The apparatus determines that the actual arrival time of the first data packet is earlier than or equal to the first preset value, and the processing unit is configured to buffer the first data packet.

With reference to the fourth aspect, in some implementations of the fourth aspect, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

With reference to the fourth aspect, in some implementations of the fourth aspect, the multiflow information further includes a size of the data packet in each data flow in the plurality of data flows and a predetermined arrival time of the data packet in each data flow in the plurality of data flows. Before that the processing unit is configured to determine the actual arrival time of the first data packet in the plurality of data flows, the apparatus further includes: The processing unit is configured to pre-allocate a resource to the data packet in each data flow in the plurality of data flows based on the multiflow information.

With reference to the fourth aspect, in some implementations of the fourth aspect, that the transceiver unit is configured to obtain multiflow information includes: The transceiver unit is configured to obtain the multiflow information from any one or more of the following: a control plane network element, the user plane function device, and the radio access network device.

According to a fifth aspect, a communication apparatus is provided, including a transceiver unit and a processing unit. The transceiver unit is configured to obtain multiflow information and a first preset value, the multiflow information includes a first period, and the apparatus is a radio access network device or a user plane function device. In the first period, if the processing unit is configured to determine that an actual arrival time of a first data packet in a plurality of data flows is later than the first preset value, the transceiver unit is configured to send indication information to a transmit end device, where the indication information indicates to retransmit a data packet in each data flow in the plurality of data flows.

With reference to the fifth aspect, in some implementations of the fifth aspect, that the transceiver unit is configured to send indication information to a transmit end device includes: The processing unit is configured to generate an acknowledgment data packet; and the transceiver unit is configured to send the acknowledgment data packet to the transmit end device, where the acknowledgment data packet is used to indicate to retransmit the data packet in each data flow in the plurality of data flows.

With reference to the fifth aspect, in some implementations of the fifth aspect, the apparatus further includes: The apparatus determines that the actual arrival time of the first data packet is earlier than or equal to the first preset value, and the processing unit is configured to buffer the first data packet.

With reference to the fifth aspect, in some implementations of the fifth aspect, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

With reference to the fifth aspect, in some implementations of the fifth aspect, the multiflow information further includes a size of the data packet in each data flow in the plurality of data flows and a predetermined arrival time of the data packet in each data flow in the plurality of data flows. Before that the processing unit is configured to determine the actual arrival time of the first data packet in the plurality of data flows, the apparatus further includes: The processing unit is configured to pre-allocate a resource to the data packet in each data flow in the plurality of data flows based on the multiflow information.

With reference to the fifth aspect, in some implementations of the fifth aspect, that the transceiver unit is configured to obtain multiflow information includes: The transceiver unit is configured to obtain the multiflow information from any one or more of the following: a control plane network element, the user plane function device, and the radio access network device.

According to a sixth aspect, a communication apparatus is provided, including a transceiver unit and a processing unit. The processing unit is configured to determine a first rule, where the first rule is a sum of an actual arrival time of a data packet in at least one of a plurality of data flows and a preset time interval between arrival times of two data packets in the plurality of data flows; and the transceiver unit is configured to send the first rule to a first network element, where the first network element is a radio access network device or a user plane function device.

With reference to the sixth aspect, in some implementations of the sixth aspect, the transceiver unit is configured to obtain multiflow information, where the multiflow information includes one or more of the following information: a first period, a size of a data packet in each data flow in the plurality of data flows, a predetermined arrival time of the data packet in each data flow in the plurality of data flows, and a preset time interval between arrival times of two data packets in the plurality of data flows. That the processing unit is configured to determine a first rule includes: The processing unit is configured to determine the first rule based on the multiflow information.

With reference to the sixth aspect, in some implementations of the sixth aspect, that the transceiver unit is configured to send the multiflow information to a first network element includes: The processing unit is configured to determine a maximum value of a size of the data packet in each data flow in the first period; and when the maximum value is less than or equal to a size of a resource of the first network element, the transceiver unit is configured to send the multiflow information to the first network element.

With reference to the sixth aspect, in some implementations of the sixth aspect, that the processing unit is configured to obtain multiflow information includes: The apparatus obtains the multiflow information from any one or more of the following: the application function device, the radio access network device, and the user plane function device.

According to a seventh aspect, a communication apparatus is provided. The apparatus is configured to perform the method in any one of the first aspect to the possible implementations of the third aspect. Specifically, the apparatus may include units and/or modules configured to perform the method in any one of the possible implementations of the first aspect to the third aspect, for example, a processing unit and/or a transceiver unit.

In an implementation, the apparatus is a first network element or a control plane network element. When the apparatus is the first network element or the control plane network element, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used for the first network element or the control plane network element. When the apparatus is the chip, the chip system, or the circuit used for the first network element or the control plane network element, the transceiver unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any one of the possible implementations of the first aspect to the third aspect. Optionally, the apparatus further includes a memory, configured to store the computer program or the instructions. Optionally, the apparatus further includes a communication interface, and the processor reads, through the communication interface, the computer program or the instructions stored in the memory.

In an implementation, the apparatus is a first network element or a control plane network element.

In another implementation, the apparatus is a chip, a chip system, or a circuit used for the first network element or the control plane network element.

According to a ninth aspect, this application provides a processor, configured to perform the methods provided in the foregoing aspects.

Unless otherwise specified, or if the operations such as sending and obtaining/receiving related to the processor do not conflict with actual functions or internal logic of the processor in related descriptions, the operations may be understood as operations such as output, receiving, and input of the processor, or may be understood as sending and receiving operations performed by a radio frequency circuit and an antenna. This is not limited in this application.

According to a tenth aspect, a computer-readable storage medium is provided. The computer-readable storage medium stores program code to be executed by a device, and the program code includes the method in any one of the first aspect to the possible implementations of the third aspect.

According to an eleventh aspect, a computer program product including instructions is provided. When the computer program product runs on a computer, the computer is enabled to perform the method in any one of the possible implementations of the first aspect to the third aspect.

### BRIEF DESCRIPTION OF DRAWINGS

FIG. 1 is a schematic diagram of a network architecture applied to an embodiment of this application;
FIG. 2 is a schematic diagram of a multiflow synchronization method 200 according to an embodiment of this application;
FIG. 3 is a flowchart of a multiflow synchronization method 300 according to an embodiment of this application;
FIG. 4 is a schematic flowchart of a multiflow synchronization method 400 according to an embodiment of this application;
FIG. 5 is a schematic flowchart of another multiflow synchronization method 500 according to an embodiment of this application;
FIG. 6 is a schematic flowchart of still another multiflow synchronization method 600 according to an embodiment of this application;
FIG. 7 is a schematic block diagram of a communication apparatus 700 according to an embodiment of this application;
FIG. 8 is a schematic block diagram of another communication apparatus 800 according to an embodiment of this application; and
FIG. 9 is a schematic diagram of a chip system 900 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device- to-device (device-to-device, D2D) communication system, a vehicle-to-everything (vehicle-to-everything, V2X) communication system, a machine to machine (machine-to-machine, M2M) communication system, a machine type communication (machine type communication, MTC) system, an Internet of Things (internet of things, IoT) communication system, or another communication system.

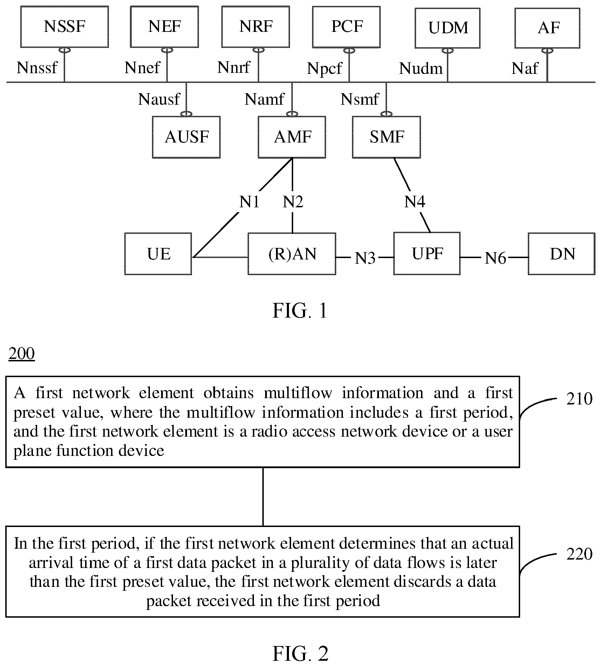

First, a network architecture applicable to embodiments of this application is briefly described with reference to FIG. 1. The following is an example.

As shown in FIG. 1, a 5GS is used as an example of the network architecture. The network architecture may include but is not limited to an access and mobility management function (access and mobility management function, AMF) device, a unified data management (unified data management, UDM) device, a radio access network (radio access network, RAN) device, a policy control function (policy control function, PCF) device, user equipment (user equipment, UE), a user plane function (user plane function, UPF) device, a data network (data network, DN) device, an authentication server function (authentication server function, AUSF) device, a network slice selection function (network slice selection function, NSSF) device, an application function (application function, AF) device, a session management function (session management function, SMF) device, a network exposure function (network exposure function, NEF) device, a network repository function (network repository function, NRF) device, and the like.

Main functions of the network elements (or devices) shown in FIG. 1 are described as follows.
1. UE: The UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, for example, various smart bands or smart jewelry for monitoring physical symptoms.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things.

It should be noted that the terminal device and the access network device may communicate with each other by using an air interface technology (for example, an NR technology or an LTE technology). Alternatively, the terminal device and the terminal device may communicate with each other by using the air interface technology (for example, the NR technology or the LTE technology).

In embodiments of this application, an apparatus configured to implement a function of the terminal device may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

2. RAN: The RAN may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a 3rd generation (3rd generation, 3G), a 4th generation (4th generation, 4G), or a 5G system) and a non-3GPP (non-3GPP) access technology. The 3GPP access technology is an access technology that complies with a 3GPP standard specification. For example, an access network device in a 5G system is referred to as a next generation node base station (next generation node base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX) technology, a code division multiple access (code division multiple access, CDMA) technology, and the like. The AN device may allow interconnection and interworking between the terminal device and the 3GPP core network by using the non-3GPP technology.

The AN device can be responsible for functions such as radio resource management, quality of service (quality of service, QoS) management, and data compression and encryption on an air interface side. The AN device provides an access service for the terminal device, to forward a control signal and user data between the terminal device and a core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). Alternatively, the radio access network may include a gNB or a transmission point (TRP or TP) in a 5G (for example, NR) system, or one antenna panel or a group of antenna panels (including a plurality of antenna panels) of a base station in the 5G system. Alternatively, the AN device may include a network node constituting a gNB or a transmission point, for example, a distributed unit (distributed unit, DU), or a base station in a next-generation 6G communication system. A specific technology and a specific device form used by the AN device are not limited in this embodiment of this application.
3. AMF: The AMF is mainly used for functions such as access control, mobility management, and attach and detach. The access management network element may further serve as an anchor for connection of N1 signaling (that is, N1 interface signaling, which is referred to as N1 signaling for brevity) and N2 signaling (that is, N2 interface signaling, which is referred to as N2 signaling for brevity), to provide routing of an N1/N2 session management (session management, SM) message for the session management network element. The access management network element may further maintain and manage state information of the UE.
4. SMF: The SMF is mainly configured to: select a user plane function device, redirect a user plane function device, allocate an internet protocol (internet protocol, IP) address to a terminal device, establish, modify, and release a session, and perform QoS control.
5. UPF: The UPF is mainly configured to receive and forward user plane data. For example, the UPF may receive the user plane data from the DN, and send the user plane data to the terminal device by using the AN device. The UPF may further receive the user plane data from the terminal device by using the AN device, and forward the user plane data to the DN.
6. PCF: The PCF is mainly configured to guide a unified policy framework for network behavior, and provides policy rule information and the like for a control plane network element (such as the AMF or the SMF).
7. AF: The AF is mainly configured to provide a service for the 3GPP network, for example, interact with the PCF to perform policy control. The AF may be a third-party functional entity, or may be an operator-deployed application service, for example, an IP multimedia subsystem (IP multimedia subsystem, IMS) voice call service. In this application, a multi-access edge computing (multi-access edge computing, MEC) platform or an application server may be used as the AF to communicate with a 5G core network.
8. UDM: The UDM is mainly used for subscription data management of the UE, including storage and management of a UE identifier, access authorization of the UE, and the like.
9. DN: The DN is mainly used for an operator network that provides a data service for the UE, for example, the Internet (Internet), a third-party service network, and an IP multimedia service (IP multi-media service, IMS) network.
10. AUSF: The AUSF is mainly used for user authentication.
11. NSSF: The NSSF is mainly configured to determine, based on slice selection assistance information, subscription information, and the like of the UE, a network slice instance that the UE is allowed to access.
12. NEF: The NEF may also be referred to as a network exposure device, a network exposure functional entity, a network exposure function network element, a network capability exposure functional entity, a network capability exposure function device, a network capability exposure function network element, a network capability exposure device, or the like. The NEF is mainly configured to support capability and event exposure, for example, is configured to securely expose, to the outside, a service and a capability provided by the 3GPP network function.
13. NRF: The NRF may also be referred to as a network storage device, a network storage function network element, or a network storage functional entity, and is mainly configured to support a service discovery function. The NRF receives a network element discovery request from a network element function or a service communication agent (service communication proxy, SCP), and may feedback network element discovery request information. In addition, the NRF is further configured to maintain information about available network functions and services supported by the available network functions. The NRF can also be understood as a network storage device. A discovery process is a process in which a requirement network function (network function, NF) implements specific NF or specific service addressing by using the NRF. The NRF provides an IP address, a fully qualified domain name (fully qualified domain name, FQDN), or uniform resource identifier (unified resource identifier, URI) of a corresponding NF instance or an NF service instance. In addition, the NRF can provide a network identifier (such as a PLMN ID) to implement an inter-PLMN discovery procedure. To implement addressing and discovery of network element functions, each network element needs to be registered in the NRF. Some network element functions may be registered in the NRF when the network element runs for the first time. The network storage function device may be a core network device.

In the network architecture shown in FIG. 1, network elements may communicate with each other through interfaces shown in the figure. As shown in FIG. 1, the UE and the AMF may communicate with each other through the N1 interface. The RAN and the AMF may communicate with each other through the N2 interface. The RAN and the UPF may communicate with each other through the N3 interface. The SMF and the UPF may communicate with each other through the N4 interface. Some network elements may also interact with each other by using a service-oriented interface. For example, a service-oriented interface provided by the AMF for an external system may be Namf. An external service-oriented interface provided by the SMF may be Nsmf. An external service-oriented interface provided by the NEF may be Nnef. An external service-based interface provided by the NRF may be Nnrf. An external service-oriented interface provided by the AF may be Naf. Relationships between other interfaces and network elements are shown in FIG. 1. For brevity, details are not described herein.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

It should be further understood that the network elements shown in FIG. 1, such as functions or network elements such as the AMF, the SMF, the UPF, the PCF, the UDM, the NSSF and the AUSF may be understood as network elements configured to implement different functions, for example, may be combined into a network slice as required. These network elements may be independent devices, or may be integrated into a same device to implement different functions, or may be a network element in a hardware device, or may be a software function running on dedicated hardware, or may be a virtualization function instantiated on a platform (for example, a cloud platform). A specific form of the network element is not limited in this application.

It should be further understood that the foregoing names are defined merely for distinguishing between different functions, and should not constitute any limitation on this application. This application does not exclude a possibility of using other names in the 6G network and another future network. For example, in a 6G network, some or all of the foregoing network elements may still use terms in 5G, may use other names.

In some application scenarios, a same service may generate a plurality of data flows that are associated with each other. The service can run normally only when a receive end receives data packets of the plurality of data flows and implements multiflow synchronization. However, multiflow synchronization may not be implemented for data packets of a part of data flows in the service due to an exception such as a packet loss or congestion. As a result, the service cannot run normally, which affects normal use of a user and wastes network bandwidth.

For example, in an augmented reality (augmented reality, AR) application, a background in an AR image generates a data flow, and a virtual picture of a foreground added by the AR also generates a data flow. When multiflow synchronization is implemented between the data flow generated by the background in the AR image and the data flow generated by the virtual picture of the foreground added by the AR, the user can normally have AR experience. For another example, in high-definition 360-degree panoramic video transmission, a 360-degree video frame is split into different parts, and each part generates a data flow. When multiflow synchronization is implemented for data packets of the data flows that are split into different parts, a 360-degree picture can be formed through combination. In such an application scenario, normal transmission of data packets of a part of data flows cannot ensure normal use of the user. Therefore, normal transmission of data packets of the part of data flows is invalid, and network bandwidth is occupied, causing a waste of resources.

In the conventional technology, multiflow synchronization of a same service is implemented at a receive end device. Specifically, after receiving data packets of the part of data flows, the receive end device first buffers the data packets of the part of data flows, and after receiving data packets of all data flows, the service can run normally. However, when the receive end device cannot receive data packets of all data flows due to an exception such as a packet loss or congestion of data packets of the part of the data flows, normal operation of the service is affected. A data packet of a normally transmitted data flow that has been received by the receive end device occupies storage resources of the receive end device, resulting in a waste of resources. In addition, determining of multiflow synchronization at the receive end device may fail to quickly feed back an exception such as a packet loss or congestion of the data flow.

In view of the foregoing technical problem, this application provides a multiflow synchronization method. According to the method, in this application, a packet loss can be responded more quickly, and a waste of resources of a receive end device caused by occupation of a large quantity of storage resources on the receive end device can be avoided.

The following describes in detail embodiments provided in this application with reference to the accompanying drawings.

It should be understood that, in embodiments of this application, an offset of an arrival time (for example, a predetermined arrival time or an actual arrival time) of a data packet relative to a reference time is mainly used as an example for description. For example, using a 24-hour system as an example. It is assumed that the reference time is 8:00, a time at which a packet 1 actually arrives at a network element or a device (for example, a radio access network device or another user plane function device) is 8:01, and an actual arrival time of the packet 1 is 60s (that is, 1 minute).

In the following embodiments, a predetermined arrival time of the data packet and an actual arrival time of the data packet are mentioned for a plurality of times.

The predetermined arrival time of the data packet indicates a predetermined (or original) time at which the data packet arrives at the network element or the device. For example, the predetermined arrival time of the data packet is a predetermined (or original) time at which the data packet arrives at a user plane function device. For another example, the predetermined arrival time of the data packet is a predetermined (or original) time at which the data packet arrives at a radio access network device. For another example, the predetermined arrival time of the data packet is a predetermined (or original) time at which the data packet arrives at another network element or device. This is not limited in this embodiment of this application.

The actual arrival time of the data packet indicates a time at which the data packet arrives at a network element or a device. For example, the actual arrival time of the data packet is the time at which the data packet actually arrives at the user plane function device. For another example, the actual arrival time of the data packet is the time at which the data packet actually arrives at the radio access network device. For another example, the actual arrival time of the data packet is the time at which the data packet actually arrives at the another network element or device. This is not limited in this embodiment of this application.

It should be understood that the predetermined arrival time of the data packet is not equivalent to the actual arrival time of the data packet. The actual arrival time of the data packet may be later than the predetermined arrival time of the data packet, or may be earlier than the predetermined arrival time of the data packet, or may be equal to the predetermined arrival time of the data packet. This is not limited in this embodiment of this application.

FIG. 2 is a schematic diagram of a multiflow synchronization method 200 according to an embodiment of this application. As shown in FIG. 2, the method 200 may include the following steps.

210: A first network element obtains multiflow information and a first preset value, where the multiflow information includes a first period, and the first network element is a radio access network device or a user plane function device.

Optionally, the multiflow information further includes one or more of the following information: a size of a data packet in each data flow in a plurality of data flows, a predetermined arrival time of the data packet in each data flow in the plurality of data flows, and a preset time interval between arrival times of two data packets in the plurality of data flows.

Optionally, in step 210, that a first network element obtains multiflow information includes: The first network element obtains the multiflow information, or the first network element receives the multiflow information. For example, the first network element obtains the multiflow information in a manner such as deep packet inspection (deep packet inspection, DPI) or machine learning. For another example, when the first network element is the user plane function device, the user plane function device may receive the multiflow information from a control plane network element or a radio access network device. For another example, when the first network element is the radio access network device, the radio access network device may receive the multiflow information from a control plane network element or a user plane function device.

That a control plane network element obtains the multiflow information may include: The control plane network element receives the multiflow information from the application function device; or the control plane network element receives the multiflow information obtained by the user plane function device; or the control plane network element receives the multiflow information obtained by the radio access network device. This is not limited in this embodiment of this application. For example, the control plane network element may obtain, from the application function device, the first period, the size of the data packet in each data flow in the plurality of data flows, the predetermined arrival time of the data packet in each data flow in the plurality of data flows, and the preset time interval between the arrival times of the two data packets in the plurality of data flows.

Optionally, the first network element receives a first rule from the control plane network element, where the first rule is a sum of an actual arrival time of a data packet in at least one data flow in the plurality of data flows and the preset time interval between the arrival times of the two data packets in the plurality of data flows.

Optionally, in step 210, that the first network element obtains a first preset value includes: The first network element determines the first preset value based on the obtained multiflow information or the first rule received from the control plane network element. For example, the first network element may determine the first preset value based on the predetermined arrival time of the data packet in each data flow in the plurality of data flows or the first rule received from the control plane network element.

The first preset value may be a predetermined arrival time of a first data packet in the plurality of data flows; or the first preset value is a sum of the actual arrival time of the data packet in the at least one data flow in the plurality of data flows and the preset time interval between the arrival times of the two data packets in the plurality of data flows.

Based on the foregoing technical solution, the first preset value may be determined in the following three manners.

Manner #1: The first preset value is the predetermined arrival time of the first data packet.

The predetermined arrival time of the first data packet may be a sum of an original predetermined arrival time of the first data packet and a time threshold. The original predetermined arrival time is a time at which the first data packet should arrive at the network element or the device, or a preconfigured time at which the first data packet arrives at the network element or the device. The time threshold may be predefined by a protocol, or may be manually set, or may be configured by a network side. This is not limited in this embodiment of this application. The time threshold may be 0, or may be greater than 0. It may be understood that, when the time threshold is 0, the predetermined arrival time of the first data packet is the original predetermined arrival time of the first data packet. When the time threshold is greater than 0, the predetermined arrival time of the first data packet is greater than the original predetermined arrival time of the first data packet. In this case, the time threshold may be understood as a period of time newly added when the first data packet cannot arrive at the network element or the device within the original predetermined arrival time. To be specific, the first preset value of the data packet may be extended in a range based on the original predetermined arrival time by setting the time threshold, and a time after extension is a final predetermined arrival time.

For example, if an original predetermined arrival time of a packet 1 is 8s, and a time threshold is 2s, a predetermined arrival time of the packet 1 is 10s (that is, a sum of an original predetermined arrival time of 8s of the packet 1 and the time threshold of 2s).

It should be understood that predetermined arrival times of data packets of different data flows in the first period may be different.

For example, it is assumed that there are three data flows, which are respectively denoted as a flow 1, a flow 2, and a flow 3, and each data flow in the first period has one data packet. In other words, there are three data packets corresponding to the three data flows, which are respectively denoted as a packet 1, a packet 2, and a packet 3. A predetermined arrival time of the packet 1 may be 10s, a predetermined arrival time of a packet 2 may be 15s, and a predetermined arrival time of a packet 3 may be 25s. Therefore, in Manner #1, a first preset value of the packet 1 is 10s, a first preset value of the packet 2 is 15s, and a first preset value of the packet 3 is 25s.

Manner #2: The first preset value is a sum of the actual arrival time of the data packet in the at least one data flow in the plurality of data flows and the preset time interval between the arrival times of the two data packets in the plurality of data flows.

In other words, in Manner #2, for the plurality of data flows in the first period, the first preset value of the data packet in each data flow may be: a sum of an actual arrival time of one data packet of data packets of other data flows that arrive before the data packet and a preset time interval between the arrival times of the two data packets in the plurality of data flows. It should be understood that, for a data packet that first arrives at the network element or the device in the first period, no data packet in another data flow has arrived at the network element or the device before the data packet. Therefore, the first preset value of the data packet that first arrives at the network element or the device may be determined according to Manner #1.

For example, it is assumed that there are three data flows, which are respectively denoted as a flow 1, a flow 2, and a flow 3, and each data flow in the first period has one data packet. In other words, there are three data packets corresponding to the three data flows, which are respectively denoted as a packet 1, a packet 2, and a packet 3. It is assumed that a preset time interval between arrival times of two data packets is 5s. For the packet 2, it is assumed that when the packet 2 arrives at the network element or the device, the packet 1 has arrived at the network element or the device, an actual arrival time of the packet 1 is 8s, and the packet 3 has not arrived at the network element or the device. In this case, in this manner, the first preset value of the packet 2 may be a sum of an actual arrival time of the packet 1 and a time interval between arrival times of two data packets in a plurality of preset data flows, that is, 13s (a sum of the actual arrival time of 8s of the packet 1 and a time interval of 5s). For the packet 3, it is assumed that when the packet 3 arrives at the network element or the device, the packet 1 and the packet 2 have arrived at the network element or the device, and the actual arrival time of the packet 1 and the packet 2 are 8s and 12s respectively. In this case, in this manner, the first preset value of the packet 3 may be a sum of the actual arrival time of the packet 1 and the time interval between the arrival time of two data packets in the preset plurality of data flows, that is, 13s (the sum of the actual arrival time of 8s of the packet 1 and the time interval of 5s), or may be a sum of an actual arrival time of the packet 2 and a time interval between arrival times of two data packets in a plurality of preset data flows, that is, 17s (a sum of an actual arrival time of 12s of the packet 2 and a time interval of 5s).

Manner #3: When two first preset values are calculated in Manner #1 and Manner #2, the first preset value may be a smaller value in the two first preset values.

For example, it is assumed that there are two data flows, which are respectively denoted as a flow 1 and a flow 2, and each data flow in the first period has one data packet. In other words, there are two data packets corresponding to the two data flows, which are respectively denoted as a packet 1 and a packet 2. It is assumed that a preset arrival time of the packet 1 and a preset arrival time of the packet 2 are 10s and 12s respectively, and a preset time interval between arrival times of the two data packets is 5s. It is assumed that packet 1 is a first data packet, and packet 2 does not arrive at the network element or the device. The first preset value of the packet 1 determined according to Manner #1 is 10s (that is, a predetermined arrival time of the packet 1). Because no data packet in another data flow has arrived at the network element or the device before the packet 1 arrives at the network element or the device, the first preset value of the packet 1 in Manner #3 may be determined according to Manner #1, that is, the first preset value of the packet 1 determined according to Manner #3 is 10s. It is assumed that the packet 2 is a first data packet, the packet 1 has arrived at the network element or the device, and an actual arrival time of the packet 1 is 8s. In this case, a first preset value corresponding to packet 2 determined according to Manner #1 is 12s (that is, a predetermined arrival time of the packet 2), the first preset value of the packet 2 determined according to Manner #2 may be a time interval between the actual arrival time of the packet 1 and a preset arrival time of two data packets, that is, 13s (a sum of the actual arrival time of 8s of the packet 1 and the time interval of 5s), and the first preset value of the packet 2 determined according to Manner #3 is a minimum value of 12s in Manner #1 and Manner #2.

220: In the first period, if the first network element determines that an actual arrival time of a first data packet in a plurality of data flows is later than the first preset value, the first network element discards a data packet received in the first period.

The first data packet is a data packet that just arrives at the network element or the device. For example, it is assumed that there are three data flows, which are respectively denoted as a flow 1, a flow 2, and a flow 3, and each data flow in the first period has one data packet. In other words, there are three data packets corresponding to the three data flows, which are respectively denoted as a packet 1, a packet 2, and a packet 3. The packet 1 has been buffered by the network element or the device, the packet 2 just arrives at the network element or the device, and the packet 3 has not arrived at the network element or the device. In this case, the first data packet is the packet 2.

Optionally, the first network element determines that the actual arrival time of the first data packet is earlier than or equal to the first preset value, and the first network element buffers the first data packet.

Therefore, before the first network element determines that an actual arrival time of a data packet is later than the first preset value corresponding to the data packet, the first network element may have buffered one or more data packets received in the first period. When the first network element determines that the actual arrival time of the data packet is later than the first preset value corresponding to the data packet, the first network element may discard one or more data packets received in the first period.

For example, it is assumed that there are three data flows, which are respectively denoted as a flow 1, a flow 2, and a flow 3, and each data flow in the first period has one data packet. In other words, there are three data packets corresponding to the three data flows, which are respectively denoted as a packet 1, a packet 2, and a packet 3. In a scenario in which the first preset value is determined by using the foregoing Manner #1 or Manner #3, it is assumed that predetermined arrival times of the packet 1, the packet 2, and the packet 3 are respectively 10s, 15s, and 20s. In a scenario in which the foregoing Manner #2 or Manner #3 is used to determine the first preset value, a preset time interval between arrival times of two data packets is 5s. The following describes processing of data packets that arrive at different times by the first network element with reference to specific examples.
(1) It is assumed that the packet 1 is the first data packet, and the packet 2 and the packet 3 have not arrived at the first network element. The first preset value of the packet 1 determined according to Manner #1 is 10s (the preset arrival time of the packet 1). Because no data packet in another data flow has arrived at the first network element before the packet 1 arrives at the first network element, the first preset value of the packet 1 determined according to Manner #3 is the same as the first preset value of the packet 1 determined according to Manner #1, that is, the first preset value of the packet 1 determined according to Manner #3 is 10s. If the packet 1 does not arrive within 10s, the first network element does not receive a subsequent packet 2 and a subsequent packet 3. If the packet 1 arrives within 10s, the first network element buffers the packet 1 and continues to wait for receiving of the packet 2 and the packet 3. For example, it is assumed that the actual arrival time of the packet 1 is 8s. In this case, the actual arrival time of 8s of the packet 1 is earlier than the first preset value of 10s of the packet 1. The first network element buffers the packet 1, and continues to wait for receiving of the packet 2 and the packet 3.
(2) It is assumed that packet 2 is the first data packet, the packet 1 has been buffered by the first network element, an actual arrival time of the packet 1 is 8s, and the packet 3 has not arrived at the first network element. A first preset value of the packet 2 determined according to Manner #1 is 15s (a predetermined arrival time of the packet 2). A first preset value of the packet 2 determined according to Manner #2 may be a time interval between an actual arrival time of the packet 1 and a preset arrival time of two data packets, that is, 13s (a sum of the actual arrival time of 8s of the packet 1 and the time interval of 5s). The first preset value of the packet 2 determined according to Manner #3 is a minimum value of 13s in Manner #1 and Manner #2. In an actual operation, the first preset value only needs to be determined in one of Manner #1 to Manner #3. If the packet 2 does not arrive within the first preset value determined in the corresponding manner, the first network element discards the buffered packet 1, and does not receive the subsequent packet 3. If the packet 2 arrives within the first preset value determined in the corresponding manner, the first network element further buffers the packet 2, and continues to wait for receiving of the packet 3.

For example, the actual arrival time of the packet 2 is 14s. If the first preset value (15s) of the packet 2 is determined according to Manner #1, because the actual arrival time of the packet 2 is earlier than the first preset value, the first network element buffers the packet 2 and continues to wait for receiving of the packet 3. If the first preset value (13s) of the packet 2 is determined according to Manner #2 or Manner #3, because the actual arrival time of the packet 2 is later than the first preset value, the first network element discards the buffered packet 1 and does not receive the subsequent packet 3.

(3) It is assumed that the packet 3 is the first data packet, the packet 1 and the packet 2 are buffered by the first network element, and actual arrival times of the packet 1 and the packet 2 are 8s and 12s respectively. A first preset value of the packet 3 determined according to Manner #1 is 20s (a predetermined arrival time of the packet 3). A first preset value of the packet 3 determined according to Manner #2 may be a time interval between an actual arrival time of the packet 1 and a preset arrival time of two data packets, that is, 13s (a sum of the actual arrival time of 8s of the packet 1 and the time interval of 5s). The first preset value of the packet 3 determined according to Manner #3 is a minimum value of 13s in Manner #1 and Manner #2. Alternatively, the first preset value of the packet 3 determined according to Manner #2 may be a time interval between an actual arrival time of the packet 2 and a preset arrival time of two data packets, that is, 17s (a sum of the actual arrival time of 12s of the packet 2 and the time interval of 5s). The first preset value of the packet 3 determined according to Manner #3 is a minimum value of 17s in Manner #1 and Manner #2. In an actual operation, the first preset value only needs to be determined in one of Manner #1 to Manner #3. If the packet 3 does not arrive within the first preset value determined in the corresponding manner, the first network element discards the buffered packet 1 and packet 2. If the packet 3 arrives within the first preset value determined in the corresponding manner, the first network element sends the buffered packet 1, packet 2, and packet 3 to the receive end device.

It is assumed that a first preset value of the packet 3 determined according to Manner #1 is 20s (a predetermined arrival time of the packet 3). A first preset value of the packet 3 determined according to Manner #2 or Manner #3 is 17s (a time interval between an actual arrival time of the packet 2 and a preset arrival time of two data packets). For example, the actual arrival time of the packet 3 is 19s. If the first preset value (20s) of the packet 3 is determined according to Manner #1, because the actual arrival time of the packet 3 is earlier than the first preset value, the first network element sends the buffered packet 1, packet 2, and packet 3 to the receive end device. If the first preset value (17s) of the packet 3 is determined according to Manner #2 or Manner #3, because the actual arrival time of the packet 3 is later than the first preset value, the first network element discards the buffered packet 1 and packet 2.

Based on the foregoing technical solution, the first network element (for example, a radio access network device or a user plane function device) may discard, based on data packet transmission, a plurality of data packets that are received in the first period and for which multiflow synchronization cannot be implemented. For example, if the actual arrival time of the first data packet in the plurality of data flows is later than the first preset value, the first network element discards a data packet received in the first period. In this manner, not only an exception of a data packet can be quickly fed back, for example, a response to a packet loss can be made more quickly, but also signaling overheads caused when the first network element sends a plurality of data packets for which multiflow synchronization is not implemented to the receive end device in the first period. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

Optionally, in response to that the first network element determines that the actual arrival time of the first data packet in the plurality of data flows is later than the first preset value, the first network element sends indication information to a transmit end device, where the indication information indicates to retransmit a data packet in each data flow in the plurality of data flows.

That the first network element sends indication information to a transmit end device may include: The first network element generates an acknowledgment data packet; and the first network element sends the acknowledgment data packet to the transmit end device, where the acknowledgment data packet is used to indicate to retransmit the data packet in each data flow in the plurality of data flows.

Optionally, when data packet transmission is uplink transmission, the first network element may be a radio access network device, the transmit end device may be a terminal device, and the receive end device may be a data network device. When data packet transmission is downlink transmission, the first network element may be a user plane function device, the transmit end device may be a data network device, and the receive end device may be a terminal device.

Optionally, before the first network element determines the actual arrival time of the first data packet in the plurality of data flows, the first network element pre-allocates a resource to a data packet in each data flow in the plurality of data flows based on the multiflow information. For example, the user plane function device may pre-allocate a buffer resource to the data packet in each data flow in the plurality of data flows based on the size of the data packet in each data flow in the plurality of data flows and the predetermined arrival time of the data packet in each data flow in the plurality of data flows. For another example, the radio access network device may pre-allocate an air interface resource to the data packet in each data flow in the plurality of data flows based on the size of the data packet in each data flow in the plurality of data flows and the predetermined arrival time of the data packet in each data flow in the plurality of data flows.

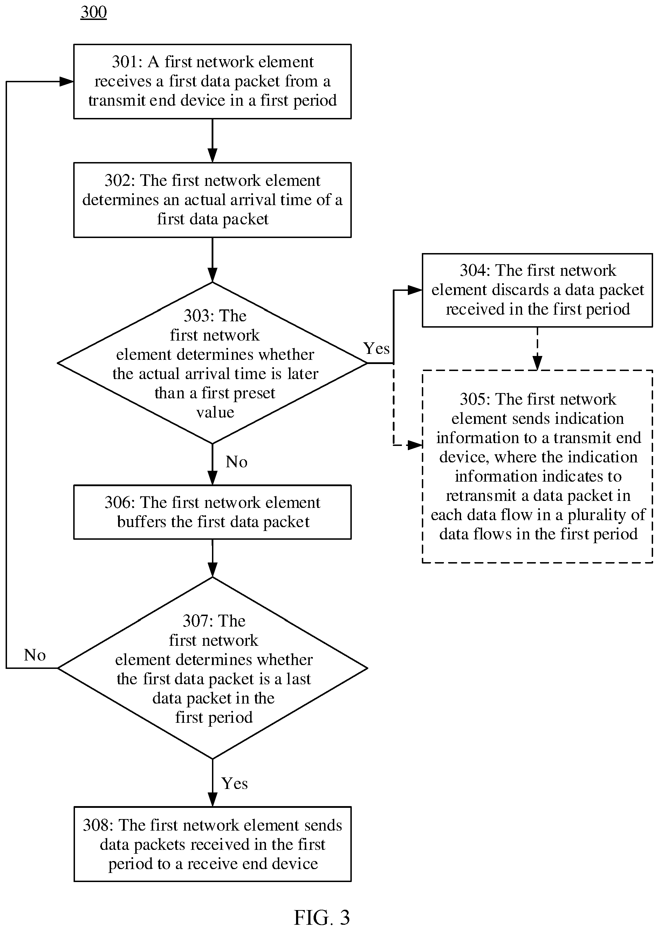

FIG. 3 is a flowchart of a multiflow synchronization method 300 according to an embodiment of this application. As shown in FIG. 3, a procedure that a first network element processes a data packet received in a first period may include the following steps.

301: The first network element receives a first data packet from a transmit end device in the first period.

302: The first network element determines an actual arrival time of the first data packet.

303: The first network element determines whether the actual arrival time is later than a first preset value.

If yes, at least one of step 304 or step 305 is performed; or if no, step 306 is performed.

It should be understood that for setting of the first preset value, refer to the foregoing descriptions of Manner #1 to Manner #3. In other words, whether the actual arrival time of the first data packet is later than the first preset value is determined, so that it may be determined whether the actual arrival time of the first data packet is later than the predetermined arrival time of the first data packet, or it may be determined whether the actual arrival time of the first data packet is later than a sum of an actual arrival time of a data packet in at least one data flow in a plurality of data flows and a preset time interval between arrival times of two data packets in the plurality of data flows.

304: The first network element discards a data packet received in the first period.

After discarding the data packet received in the first period, the first network element no longer receives another data packet that does not arrive in the first period.

Optionally, the first network element may continue to perform step 305 to indicate a terminal device to retransmit a data packet in each data flow in the plurality of data flows in the first period.

305: The first network element sends indication information to the transmit end device, where the indication information indicates to retransmit the data packet in each data flow in the plurality of data flows in the first period.

It should be further understood that, after the first network element determines that the actual arrival time of the first data packet is later than the first preset value, the first network element may choose to discard the data packet received in the first period (that is, step 304), or may choose to directly send the indication information to the transmit end device, to indicate the terminal device to retransmit the data packet in each data flow in the plurality of data flows in the first period (that is, step 305). In the two processing manners, not only an exception of a data packet can be quickly fed back, for example, a response to a packet loss can be made more quickly, but also signaling overheads caused when the first network element sends a plurality of data packets for which multiflow synchronization is not implemented to a receive end device in the first period.

306: The first network element buffers the first data packet.

307: The first network element determines whether the first data packet is a last data packet in the first period.

If the first data packet is the last data packet in the first period, step 308 is performed. If the first data packet is not the last data packet in the first period, step 301 is performed, to be specific, the first network element continues to receive a next data packet in the first period.

308: The first network element sends data packets received in the first period to the receive end device.

The data packets received in the first period include one or more data packets buffered in the first network element.

Based on step 308, when the first network element sends the data packets received in the first period to the receive end device, multiflow synchronization has been implemented for the data packets received by the first network element in the first period, that is, multiflow synchronization is determined at the first network element. In comparison with determining that multiflow synchronization is performed on the plurality of data packets at the receive end device, determining that multiflow synchronization is performed at the first network element can save storage resources of the receive end device, thereby reducing a waste of storage resources at the receive end.

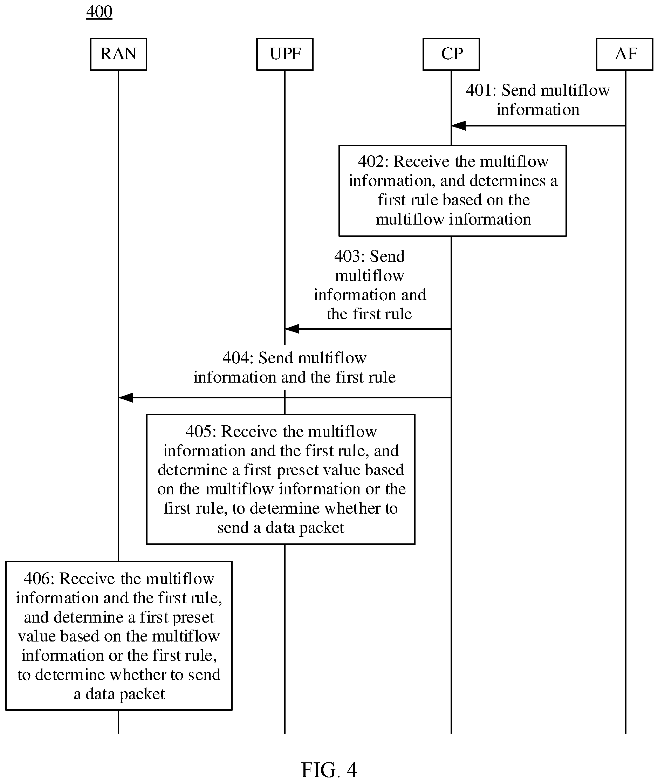

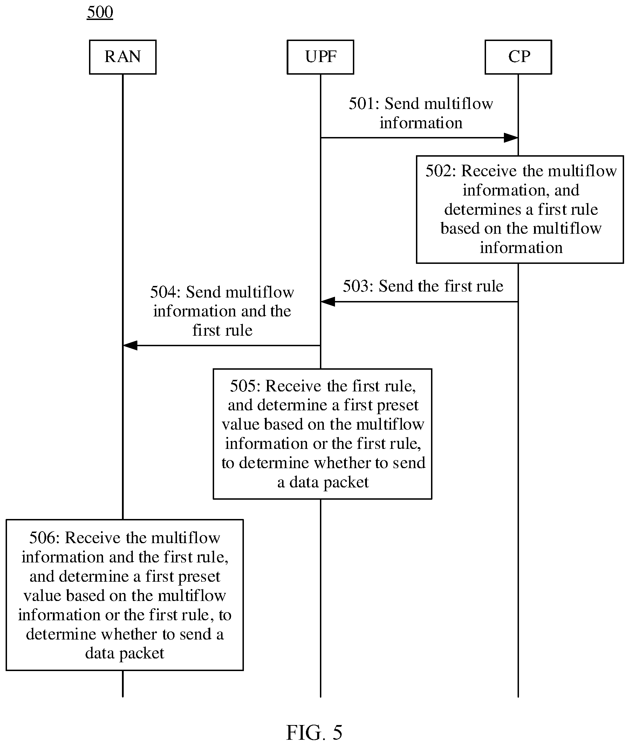

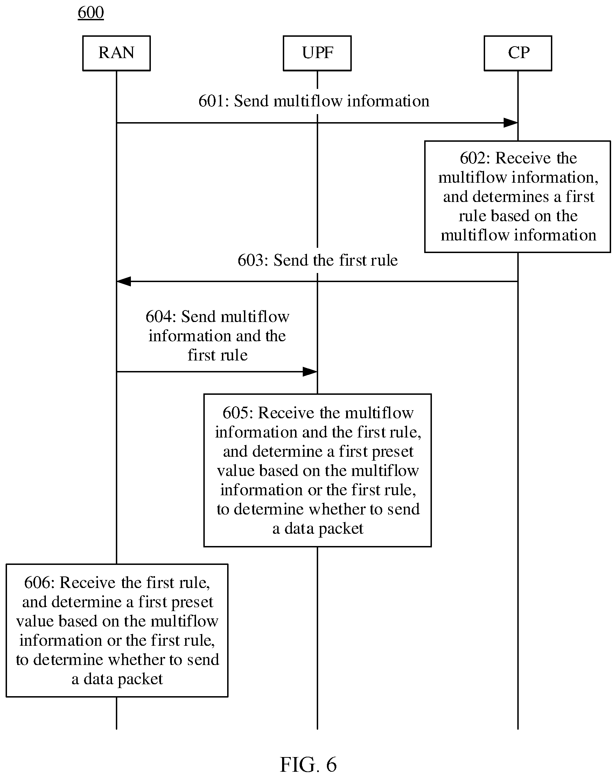

For ease of understanding, the following describes, with reference to FIG. 4 to FIG. 6, a possible procedure applicable to embodiments of this application. FIG. 4 to FIG. 6 mainly describe the possible procedure in which a user plane function device and a radio access network function device obtain multiflow information and a first rule, determine a first preset value based on the obtained multiflow information or the first rule, and determine, based on the first preset value, whether to send a data packet to a receive end device. The method 400 shown in FIG. 4 may be used by a user plane function device and a radio access network function device to receive multiflow information and a first rule that are from a control plane network element, determine a first preset value based on the received multiflow information or the first rule, and determine, based on the first preset value, whether to send the data packet to a receive end device. The method 500 shown in FIG. 5 may be used by a user plane function device to obtain multiflow information, and send the multiflow information obtained by the user plane function device to a control plane network element. The user plane function device receives a first rule from the control plane network element, determines a first preset value based on the multiflow information obtained by the user plane function device or the first rule sent by the control plane network element, and determines, based on the first preset value, whether to send a data packet to a receive end device. A radio access network device receives multiflow information and a first rule that are from the user plane function device, determines a first preset value based on the multiflow information or the first rule that is sent by the user plane function device, and determines, based on the first preset value, whether to send a data packet to a receive end device. The method 600 shown in FIG. 6 may be used by a radio access network device to obtain multiflow information, and send the multiflow information obtained by the radio access network device to a control plane network element. The radio access network device receives a first rule from the control plane network element, determines a first preset value based on the multiflow information obtained by the radio access network device or the first rule sent by the control plane network element, and determines, based on the first preset value, whether to send a data packet to a receive end device. A user plane function device receives multiflow information and a first rule that are from the radio access network device, determines a first preset value based on the multiflow information or the first rule that is sent by the radio access network device, and determines, based on the first preset value, whether to send a data packet to a receive end device.

FIG. 4 is a schematic flowchart of a multiflow synchronization method 400 according to an embodiment of this application. The method 400 may include the following steps.

401. An AF sends multiflow information to a CP.

The multiflow information may include one or more of the following information: a first period, a size of a data packet in each data flow in a plurality of data flows, a predetermined arrival time of the data packet in each data flow in the plurality of data flows, and a preset time interval between arrival times of two data packets in the plurality of data flows.

The predetermined arrival time of the data packet may include a predetermined time at which the data packet arrives at a UPF and a predetermined time at which the data packet arrives at a RAN.

402: The CP receives the multiflow information, and determines a first rule based on the multiflow information.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows.

The first rule is a sum of an actual arrival time of a data packet in at least one data flow in the plurality of data flows and the preset time interval between the arrival times of the two data packets in the plurality of data flows.

Optionally, the CP determines a maximum value of the size of the data packet in each data flow in the first period. When the maximum value is less than or equal to a size of a resource of the UPF, the CP sends the multiflow information and the first rule to the UPF. For example, an SMF receives a size of a buffer resource from the UPF. When the maximum value of the size of the data packet in each data flow in the first period is less than or equal to the size of the buffer resource of the UPF, the SMF may send the multiflow information and the first rule to the UPF through an N4* interface.

Optionally, the CP determines a maximum value of the size of the data packet in each data flow in the first period. When the maximum value is less than or equal to a size of a resource of the RAN, the CP sends the multiflow information and the first rule to the RAN. For example, the SMF receives a size of an air interface resource from the RAN. When the maximum value of the size of the data packet in each data flow in the first period is less than or equal to the size of the air interface resource of the RAN, the SMF may send the multiflow information and the first rule to the RAN through an N2* interface.

Optionally, the multiflow information may be obtained by the SMF, or may be obtained by a PCF or an NEF. The PCF or the NEF sends the multiflow information to the SMF. This is not limited in this embodiment of this application.

403: The CP sends multiflow information and the first rule to the UPF.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates the predetermined time at which the data packet arrives at the UPF.

The first rule is the sum of the actual arrival time of the data packet in the at least one data flow in the plurality of data flows and the preset time interval between the arrival times of the two data packets in the plurality of data flows.

404: The CP sends multiflow information and the first rule to the RAN.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates a predetermined time at which the data packet arrives at the RAN.

The first rule is the sum of the actual arrival time of the data packet in the at least one data flow in the plurality of data flows and the preset time interval between the arrival times of the two data packets in the plurality of data flows.

It should be understood that step 403 and step 404 may occur at the same time, or may not occur at the same time. This is not limited in this embodiment of this application. For example, the CP may first send the multiflow information and the first rule to the UPF, and then send the multiflow information and the first rule to the RAN. Alternatively, the CP may first send the multiflow information and the first rule to the RAN, and then send the multiflow information and the first rule to the UPF. Alternatively, the CP may simultaneously send the multiflow information and the first rule to the UPF and the RAN.

It should be further understood that a sequence in which the CP sends the multiflow information and the first rule to the UPF or the RAN is not limited. For example, the CP may simultaneously send the multiflow information and the first rule to the UPF or the RAN. For another example, the CP may first send the multiflow information to the UPF or the RAN, and then send the first rule. For another example, the CP may first send the first rule to the UPF or the RAN, and then send the multiflow information.

405: The UPF receives the multiflow information and the first rule, and determines a first preset value based on the multiflow information or the first rule, to determine whether to send a data packet.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates the predetermined time at which the data packet arrives at the UPF.

In the first period, if the UPF determines that the actual arrival time of the first data packet in the plurality of data flows is later than the first preset value, the UPF discards the data packet received in the first period. The first data packet is a data packet that just arrives at the UPF. For an example description of the first data packet, refer to the description in step 210. Details are not described herein again.

Optionally, the UPF may determine the first preset value based on the received multiflow information or the first rule. For example, the UPF may determine the first preset value based on the predetermined arrival time of the data packet in each data flow in the plurality of data flows or the first rule received from the CP.

The first preset value may be a predetermined arrival time of the first data packet in the plurality of data flows; or the first preset value is the sum of the actual arrival time of the data packet in the at least one data flow in the plurality of data flows and the preset time interval between the arrival times of the two data packets in the plurality of data flows.

Optionally, the UPF determines that the actual arrival time of the first data packet is earlier than or equal to the first preset value, and the UPF buffers the first data packet.

Therefore, before the UPF determines that an actual arrival time of a data packet is later than the first preset value corresponding to the data packet, the UPF may have buffered one or more data packets received in the first period. When the UPF determines that the actual arrival time of the data packet is later than the first preset value corresponding to the data packet, the UPF may discard the one or more data packets received in the first period.

For an example description that the UPF determines whether to send the data packet, refer to the description in step 220. Details are not described herein again.

Optionally, in response to that the UPF determines that the actual arrival time of the first data packet in the plurality of data flows is later than the first preset value, the UPF sends indication information to a transmit end device, where the indication information indicates to retransmit the data packet in each data flow in the plurality of data flows.

That the UPF sends the indication information to the transmit end device may include: The UPF generates an acknowledgment data packet; and the UPF sends the acknowledgment data packet to the transmit end device, where the acknowledgment data packet is used to indicate to retransmit the data packet in each data flow in the plurality of data flows.

Optionally, before the UPF determines the actual arrival time of the first data packet in the plurality of data flows, the UPF pre-allocates a resource to the data packet in each data flow in the plurality of data flows based on the multiflow information. For example, the UPF may pre-allocate a buffer resource to the data packet in each data flow in the plurality of data flows based on the size of the data packet in each data flow in the plurality of data flows and the predetermined arrival time of the data packet in each data flow in the plurality of data flows.

406: The RAN receives the multiflow information and the first rule, and determines a first preset value based on the multiflow information or the first rule, to determine whether to send a data packet.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates a predetermined (or original) time at which the data packet arrives at the RAN.

In the first period, if the RAN determines that the actual arrival time of the first data packet in the plurality of data flows is later than the first preset value, the RAN discards the data packet received in the first period. The first data packet is a data packet that just arrives at the RAN. For an example description of the first data packet, refer to the description in step 210. Details are not described herein again.

Optionally, the RAN may determine the first preset value based on the received multiflow information or the first rule. For example, the RAN may determine the first preset value based on the predetermined arrival time of the data packet in each data flow in the plurality of data flows or the first rule received from the CP.

The first preset value may be a predetermined arrival time of a first data packet in the plurality of data flows; or the first preset value is a sum of the actual arrival time of the data packet in the at least one data flow in the plurality of data flows and the preset time interval between the arrival times of the two data packets in the plurality of data flows.

Optionally, the RAN determines that the actual arrival time of the first data packet is earlier than or equal to the first preset value, and the RAN buffers the first data packet.

Therefore, before the RAN determines that an actual arrival time of a data packet is later than the first preset value corresponding to the data packet, the RAN may have buffered one or more data packets received in the first period. When the RAN determines that the actual arrival time of the data packet is later than the first preset value corresponding to the data packet, the RAN may discard one or more data packets received in the first period.

For an example description that the RAN determines whether to send the data packet, refer to the description in step 220. Details are not described herein again.

Optionally, in response to that the RAN determines that the actual arrival time of the first data packet in the plurality of data flows is later than the first preset value, the RAN sends indication information to a transmit end device, where the indication information indicates to retransmit a data packet in each data flow in the plurality of data flows.

That the RAN sends indication information to a transmit end device may include: The RAN generates an acknowledgment data packet; and the RAN sends the acknowledgment data packet to the transmit end device, where the acknowledgment data packet is used to indicate to retransmit the data packet in each data flow in the plurality of data flows.

Optionally, the multiflow information further includes a size of the data packet in each data flow in the plurality of data flows and a predetermined arrival time of the data packet in each data flow in the plurality of data flows. Before that the RAN determines the actual arrival time of the first data packet in the plurality of data flows, the RAN pre-allocates a resource to the data packet in each data flow in the plurality of data flows based on the multiflow information. For example, the RAN may pre-allocate an air interface resource to the data packet in each data flow in the plurality of data flows based on the size of the data packet in each data flow in the plurality of data flows and the predetermined arrival time of the data packet in each data flow in the plurality of data flows.

Based on the foregoing technical solution, the first network element (for example, the RAN or the UPF) may discard, based on data packet transmission, a plurality of data packets that have been received in the first period and for which multiflow synchronization cannot be implemented, and may also request the transmit end device to retransmit the data packet in each data flow in the plurality of data flows. In this manner, not only an exception of a data packet can be quickly fed back, for example, a response to a packet loss can be made more quickly, but also signaling overheads caused when the first network element sends a plurality of data packets for which multiflow synchronization is not implemented to the receive end device in the first period. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

FIG. 5 is a schematic flowchart of another multiflow synchronization method 500 according to an embodiment of this application. The method 500 may include the following steps.

501: A UPF sends multiflow information to a CP.

The multiflow information may include one or more of the following information: a first period, a size of a data packet in each data flow in a plurality of data flows, a predetermined arrival time of the data packet in each data flow in the plurality of data flows, and a preset time interval between arrival times of two data packets in the plurality of data flows.

For example, the UPF may obtain the first period, the size of the data packet in each data flow in the plurality of data flows, the predetermined arrival time of the data packet in each data flow in the plurality of data flows, and the preset time interval between the arrival times of the two data packets in the plurality of data flows in a manner of DPI, machine learning, or the like. The predetermined arrival time of the data packet obtained by the UPF is a predetermined time at which the data packet arrives at the UPF. The UPF may determine, based on the predetermined time at which the data packet arrives at the UPF, the predetermined time at which the data packet arrives at a RAN. For example, when uplink transmission is performed on the data packet, the UPF may calculate a difference between a preset time at which the data packet arrives at the UPF and a packet delay budget, to determine the preset time at which the data packet arrives at the RAN. When when downlink transmission is performed on the data packet, the UPF may calculate a sum of the preset time at which the data packet arrives at the UPF and the packet delay budget, to determine the preset time at which the data packet arrives at the RAN. The packet delay budget may be predefined by a QoS flow.

Optionally, that the UPF sends multiflow information to the CP includes: The UPF obtains the multiflow information, and sends the obtained multiflow information to the CP. For example, the UPF may send the multiflow information to an SMF through an N4* interface.

502: The CP receives the multiflow information, and determines a first rule based on the multiflow information.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows.

The first rule is the sum of the actual arrival time of the data packet in the at least one data flow in the plurality of data flows and the preset time interval between the arrival times of the two data packets in the plurality of data flows.

Optionally, the CP determines a maximum value of the size of the data packet in each data flow in the first period. When the maximum value is less than or equal to a size of a resource of the UPF, the CP sends the first rule to the UPF. For example, the SMF receives a size of a buffer resource from the UPF. When a maximum value of the size of the data packet in each data flow in the first period is less than or equal to the size of the buffer resource of the UPF, the SMF may send the first rule to the UPF through the N4* interface.

Optionally, the multiflow information may be obtained by the SMF, or may be obtained by a PCF or an NEF. The PCF or the NEF sends the multiflow information to the SMF. This is not limited in this embodiment of this application.

503: The CP sends the first rule to the UPF.

The first rule is the sum of the actual arrival time of the data packet in the at least one data flow in the plurality of data flows and the preset time interval between the arrival times of the two data packets in the plurality of data flows.

504: The UPF sends multiflow information and a first rule to the RAN.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates a predetermined time at which the data packet arrives at the RAN.

The first rule is the sum of the actual arrival time of the data packet in the at least one data flow in the plurality of data flows and the preset time interval between the arrival times of the two data packets in the plurality of data flows.

It should be understood that a sequence in which the UPF sends the multiflow information and the first rule to the RAN is not limited. For example, the UPF may simultaneously send the multiflow information and the first rule to the RAN. For another example, the UPF may first send the multiflow information to the RAN, and then send the first rule. For another example, the UPF may first send the first rule to the RAN, and then send the multiflow information.

Optionally, the UPF determines the maximum value of the size of the data packet in each data flow in the first period. When the maximum value is less than or equal to a size of a resource of the RAN, the UPF sends the multiflow information and the first rule to the RAN. For example, the UPF receives a size of an air interface resource from the RAN. When the maximum value of the size of the data packet in each data flow in the first period is less than or equal to the size of the air interface resource of the RAN, the UPF may send the multiflow information and the first rule to the RAN through an N3 * interface.

505: The UPF receives the first rule, and determines a first preset value based on the multiflow information or the first rule, to determine whether to send a data packet.

506: The RAN receives the multiflow information and the first rule, and determines a first preset value based on the multiflow information or the first rule, to determine whether to send a data packet.

For descriptions of step 505 and step 506, refer to steps 405 and 406. Details are not described herein again.

Based on the foregoing technical solution, the first network element (for example, the RAN or the UPF) may discard, based on data packet transmission, a plurality of data packets that have been received in the first period and for which multiflow synchronization cannot be implemented, and may also request the transmit end device to retransmit the data packet in each data flow in the plurality of data flows. In this manner, not only an exception of a data packet can be quickly fed back, for example, a response to a packet loss can be made more quickly, but also signaling overheads caused when the first network element sends a plurality of data packets for which multiflow synchronization is not implemented to the receive end device in the first period. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

FIG. 6 is a schematic flowchart of still another multiflow synchronization method 600 according to an embodiment of this application. The method 600 may include the following steps.

601: ARAN sends multiflow information to a CP.

The multiflow information may include one or more of the following information: a first period, a size of a data packet in each data flow in a plurality of data flows, a predetermined arrival time of the data packet in each data flow in the plurality of data flows, and a preset time interval between arrival times of two data packets in the plurality of data flows.

For example, the RAN may obtain the first period, the size of the data packet in each data flow in the plurality of data flows, the predetermined arrival time of the data packet in each data flow in the plurality of data flows, and the preset time interval between the arrival times of the two data packets in the plurality of data flows in a manner of DPI, machine learning, or the like. The predetermined arrival time of the data packet obtained by the RAN is a predetermined time at which the data packet arrives at the RAN. The RAN may determine, based on the predetermined time at which the data packet arrives at the RAN, the predetermined time at which the data packet arrives at a UPF. For example, when uplink transmission is performed on the data packet, the RAN may calculate a sum between a preset time at which the data packet arrives at the RAN and a packet delay budget, to determine the preset time at which the data packet arrives at the UPF. When when downlink transmission is performed on the data packet, the RAN may calculate a difference of the preset time at which the data packet arrives at the RAN and the packet delay budget, to determine the preset time at which the data packet arrives at the UPF. The packet delay budget may be predefined by a QoS flow.

Optionally, that the RAN sends multiflow information to the CP includes: The RAN obtains the multiflow information, and sends the obtained multiflow information to the CP. For example, the RAN may send the multiflow information to an SMF through an N2* interface.

602: The CP receives the multiflow information, and determines a first rule based on the multiflow information.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows.

The first rule is the sum of the actual arrival time of the data packet in the at least one data flow in the plurality of data flows and the preset time interval between the arrival times of the two data packets in the plurality of data flows.

Optionally, the CP determines a maximum value of the size of the data packet in each data flow in the first period. When the maximum value is less than or equal to a size of a resource of the RAN, the CP sends the first rule to the RAN. For example, the SMF receives a size of an air interface resource from the RAN. When the maximum value of the size of the data packet in each data flow in the first period is less than or equal to the size of the air interface resource of the RAN, the SMF may send the first rule to the RAN through the N2* interface.

Optionally, the multiflow information may be obtained by the SMF, or may be obtained by a PCF or an NEF. The PCF or the NEF sends the multiflow information to the SMF. This is not limited in this embodiment of this application.

603: The CP sends the first rule to the RAN.

The first rule is the sum of the actual arrival time of the data packet in the at least one data flow in the plurality of data flows and the preset time interval between the arrival times of the two data packets in the plurality of data flows.

604: The RAN sends multiflow information and a first rule to the UPF.

The multiflow information may include one or more of the following information: the first period, the size of the data packet in each data flow in the plurality of data flows, the predetermined arrival time of the data packet in each data flow in the plurality of data flows, and the preset time interval between the arrival times of the two data packets in the plurality of data flows. The predetermined arrival time of the data packet indicates a predetermined time at which the data packet arrives at the RAN.

The first rule is the sum of the actual arrival time of the data packet in the at least one data flow in the plurality of data flows and the preset time interval between the arrival times of the two data packets in the plurality of data flows.

It should be understood that a sequence in which the RAN sends the multiflow information and the first rule to the UPF is not limited. For example, the RAN may simultaneously send the multiflow information and the first rule to the UPF. For another example, the RAN may first send the multiflow information to the UPF, and then send the first rule. For another example, the RAN may first send the first rule to the UPF, and then send the multiflow information.

Optionally, the RAN determines the maximum value of the size of the data packet in each data flow in the first period. When the maximum value is less than or equal to a size of a resource of the RAN, the RAN sends the multiflow information and the first rule to the UPF. For example, the RAN receives a size of a buffer resource from the UPF. When a maximum value of the size of the data packet in each data flow in the first period is less than or equal to the size of the buffer resource of the UPF, the RAN may send the multiflow information and the first rule to the UPF through an N3 * interface.

605: The UPF receives the multiflow information and the first rule, and determines a first preset value based on the multiflow information or the first rule, to determine whether to send a data packet.

606: The RAN receives the first rule, and determines a first preset value based on the multiflow information or the first rule, to determine whether to send a data packet.

For descriptions of step 605 and step 606, refer to steps 405 and 406. Details are not described herein again.

Based on the foregoing technical solution, the first network element (for example, the RAN or the UPF) may discard, based on data packet transmission, a plurality of data packets that have been received in the first period and for which multiflow synchronization cannot be implemented, and may also request the transmit end device to retransmit the data packet in each data flow in the plurality of data flows. In this manner, not only an exception of a data packet can be quickly fed back, for example, a response to a packet loss can be made more quickly, but also signaling overheads caused when the first network element sends a plurality of data packets for which multiflow synchronization is not implemented to the receive end device in the first period. In addition, in comparison with determining that multiflow synchronization is performed on the plurality of data packets at the receive end device, in the foregoing technical solution, determining that multiflow synchronization is performed at the first network element can save storage resources of the receive end device, thereby reducing a waste of storage resources at the receive end.

It may be understood that the examples in FIG. 4 to FIG. 6 in embodiments of this application are merely intended to help a person skilled in the art understand embodiments of this application, and are not intended to limit embodiments of this application to a specific scenario shown in the examples. A person skilled in the art can apparently make various equivalent modifications or changes according to the examples shown in FIG. 4 to FIG. 6, and such modifications or changes also fall within the scope of embodiments of this application. For example, the first period in the multiflow information, the size of the data packet in each data flow in the plurality of data flows, the predetermined arrival time of the data packet in each data flow in the plurality of data flows, and the preset time interval between the arrival times of the two data packets in the plurality of data flows may be obtained by an AF, or may be obtained by the UPF, or may be obtained by the RAN. The multiflow information (for example, the first period, or the size of the data packet in each data flow in the plurality of data flows) obtained by the CP may be from the AF, or may be from the UPF, or may be from the RAN. The multiflow information (for example, the first period, or the size of the data packet in each data flow in the plurality of data flows) obtained by the UPF may be from the CP, or may be from the RAN, or may be obtained by the UPF. The multiflow information (for example, the first period, or the size of the data packet in each data flow in the plurality of data flows) obtained by the RAN may be from the CP, or may be from the UPF, or may be obtained by the RAN.

It may be further understood that names of the N2* interface, the N3* interface, and the N4* interface in embodiments of this application are defined only for ease of distinguishing between different interfaces, and should not constitute any limitation on this application. This application does not exclude a possibility of using another name.

It may be further understood that, in some scenarios, some optional features in embodiments of this application may not depend on another feature, or may be combined with another feature in some scenarios. This is not limited.

It may be further understood that the solutions in embodiments of this application may be properly combined for use, and explanations or descriptions of terms in the embodiments may be mutually referenced or explained in the embodiments. This is not limited herein.

It may be further understood that, values of various numeric sequence numbers in embodiments of this application do not mean execution sequences, are merely used for differentiation for ease of description, and should not constitute any limitation on an implementation process of embodiments of this application.

It may be further understood that, in embodiments of this application, a message name, for example, the multiflow information, is involved. It should be understood that the message name does not limit the protection scope of embodiments of this application.

It may be further understood that in some of the foregoing embodiments, a radio access network (radio access network, RAN) device, a user plane function (user plane function, UPF) device, a data network (data network, DN) device, user equipment (user equipment, UE), an application function (application function, AF) device, and a session management function (session management function, SMF) device are mainly used as examples for description. This application is not limited thereto. Any device that can implement a function of the RAN, any network element that can implement a function of the UPF, any network element that can implement a function of the DN, any device that can implement a function of the UE, any network element that can implement a function of the AF, or any network element that can implement a function of the SMF is applicable to this application.

It may be further understood that, in the foregoing method embodiments, methods and operations implemented by a device or a network element (for example, the radio access network device, or the user plane function device) may also be implemented by a component (for example, a chip or a circuit) of the device or the network element.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

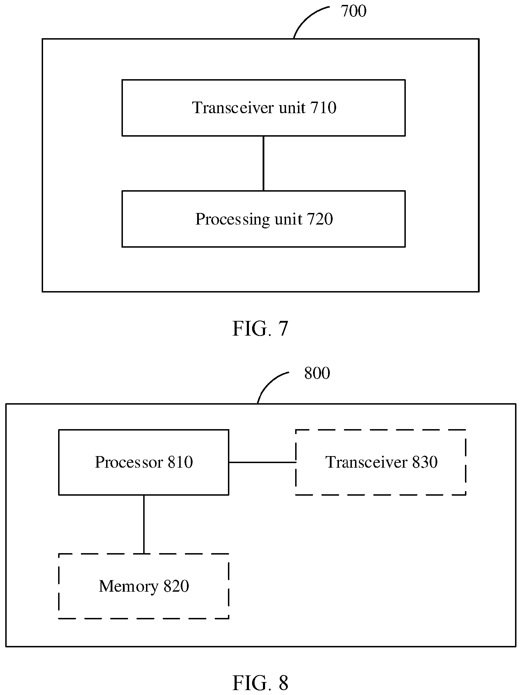

FIG. 7 is a schematic block diagram of a communication apparatus according to an embodiment of this application. The apparatus 700 includes a transceiver unit 710, and the transceiver unit 710 may be configured to implement a corresponding communication function. The transceiver unit 710 may also be referred to as a communication interface or a communication unit.

Optionally, the apparatus 700 may further include a processing unit 720. The processing unit 720 may be configured to implement a corresponding processing function, for example, determine that an actual arrival time of a first data packet in a plurality of data flows is later than a first preset value.

Optionally, the apparatus 700 further includes a storage unit. The storage unit may be configured to store instructions and/or data. The processing unit 720 may read the instructions and/or the data in the storage unit, so that the apparatus implements actions of a first network element (for example, a UPF or a RAN) or a control plane network element (for example, an SMF) in the foregoing method embodiments.

The apparatus 700 may be configured to perform an action performed by the first network element (for example, the UPF, or the RAN) or the control plane network element (for example, the SMF) in the foregoing method embodiments. In this case, the apparatus 700 may be a component of the first network element (for example, the UPF, or the RAN) or the first network element (for example, the UPF, or the RAN), or may be a component of the control plane network element (for example, the SMF) or a component of the control plane network element (for example, the SMF). The transceiver unit 710 is configured to perform a receiving and sending related operation of the first network element (for example, the UPF, or the RAN) or the control plane network element (for example, the SMF) in the foregoing method embodiments. The processing unit 720 is configured to perform a processing related operation of the first network element (for example, the UPF, or the RAN) or the control plane network element (for example, the SMF) in the foregoing method embodiments.

In a design, the apparatus 700 is configured to perform actions performed by the first network element (for example, the UPF or the RAN) in the foregoing method embodiments.

In a possible implementation, the transceiver unit 710 is configured to obtain multiflow information and a first preset value, the multiflow information includes a first period, and the apparatus 700 is a radio access network device or a user plane function device. In the first period, if the processing unit 720 is configured to determine that an actual arrival time of a first data packet in a plurality of data flows is later than the first preset value, the transceiver unit is configured to discard a data packet received in the first period.

Optionally, in response to that the processing unit 720 determines that the actual arrival time of the first data packet in the plurality of data flows is later than the first preset value, the transceiver unit 710 is configured to send indication information to a transmit end device, where the indication information indicates to retransmit a data packet in each data flow in the plurality of data flows.

Optionally, that the transceiver unit 710 is configured to send indication information to a transmit end device includes: The processing unit 720 is configured to generate an acknowledgment data packet; and the transceiver unit 710 is configured to send the acknowledgment data packet to the transmit end device, where the acknowledgment data packet is used to indicate to retransmit the data packet in each data flow in the plurality of data flows.

Optionally, the apparatus 700 further includes: The apparatus 700 determines that the actual arrival time of the first data packet is earlier than or equal to the first preset value, and the processing unit 720 is configured to buffer the first data packet.

Optionally, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

Optionally, the multiflow information further includes a size of the data packet in each data flow in the plurality of data flows and a predetermined arrival time of the data packet in each data flow in the plurality of data flows. Before that the processing unit 720 is configured to determine the actual arrival time of the first data packet in the plurality of data flows, the apparatus 700 further includes: The processing unit 720 is configured to pre-allocate a resource to the data packet in each data flow in the plurality of data flows based on the multiflow information.

Optionally, that the transceiver unit 710 is configured to obtain multiflow information includes: The transceiver unit 710 is configured to obtain the multiflow information from any one or more of the following: a control plane network element (for example, an SMF), the user plane function device, and the radio access network device.

In another possible manner, the transceiver unit 710 is configured to obtain multiflow information and a first preset value, the multiflow information includes a first period, and the apparatus 700 is a radio access network device or a user plane function device. In the first period, if the processing unit 720 is configured to determine that an actual arrival time of a first data packet in a plurality of data flows is later than the first preset value, the transceiver unit 710 is configured to send indication information to a transmit end device, where the indication information indicates to retransmit a data packet in each data flow in the plurality of data flows.

Optionally, that the transceiver unit 710 is configured to send indication information to a transmit end device includes: The processing unit 720 is configured to generate an acknowledgment data packet; and the transceiver unit 710 is configured to send the acknowledgment data packet to the transmit end device, where the acknowledgment data packet is used to indicate to retransmit the data packet in each data flow in the plurality of data flows.

Optionally, the apparatus 700 further includes: the apparatus 700 determines that the actual arrival time of the first data packet is earlier than or equal to the first preset value, and the processing unit 720 is configured to buffer the first data packet.

Optionally, the first preset value is a predetermined arrival time of the first data packet; or the first preset value is a sum of an actual arrival time of a data packet in at least one data flow in the plurality of data flows and a preset time interval between arrival times of two data packets in the plurality of data flows.

Optionally, the multiflow information further includes a size of the data packet in each data flow in the plurality of data flows and a predetermined arrival time of the data packet in each data flow in the plurality of data flows. Before that the processing unit 720 is configured to determine the actual arrival time of the first data packet in the plurality of data flows, the apparatus 700 further includes: The processing unit 720 is configured to pre-allocate a resource to the data packet in each data flow in the plurality of data flows based on the multiflow information.

Optionally, that the transceiver unit 710 is configured to obtain multiflow information includes: The transceiver unit 710 is configured to obtain the multiflow information from any one or more of the following: a control plane network element (for example, an SMF), the user plane function device, and the radio access network device.

The apparatus 700 may implement steps or procedures performed by the first network element (for example, the UPF or the RAN) in the method embodiments according to embodiments of this application. The apparatus 700 may include units configured to perform the method performed by the first network element (for example, the UPF or the RAN) in any one of the embodiments shown in FIG. 2 to FIG. 6.

In another design, the apparatus 700 is configured to perform actions performed by the control plane network element (for example, the SMF) in the foregoing method embodiments.

In a possible manner, the processing unit 720 is configured to determine a first rule, where the first rule is a sum of an actual arrival time of a data packet in at least one of a plurality of data flows and a preset time interval between arrival times of two data packets in the plurality of data flows; and the transceiver unit 710 is configured to send the first rule to a first network element, where the first network element is a radio access network device or a user plane function device.

Optionally, the transceiver unit 710 is configured to obtain multiflow information, where the multiflow information includes one or more of the following information: a first period, a size of a data packet in each data flow in the plurality of data flows, a predetermined arrival time of the data packet in each data flow in the plurality of data flows, and a preset time interval between arrival times of two data packets in the plurality of data flows. That the processing unit 720 is configured to determine a first rule includes: The processing unit 720 is configured to determine the first rule based on the multiflow information.

Optionally, that the transceiver unit 710 is configured to send the multiflow information to the first network element (for example, the UPF or the RAN) includes: The processing unit 720 is configured to determine a maximum value of a size of the data packet in each data flow in a first period; and when the maximum value is less than or equal to a size of a resource of the first network element (for example, the UPF or the RAN), the transceiver unit 710 is configured to send the multiflow information to the first network element (for example, the UPF or the RAN).

Optionally, that the processing unit 720 is configured to obtain multiflow information includes: The apparatus obtains the multiflow information from any one or more of the following: the application function device, the radio access network device, and the user plane function device.

The apparatus 700 may implement steps or procedures performed by a control plane network element (for example, an SMF) in the method embodiments according to embodiments of this application. The apparatus 700 may include units configured to perform the method performed by the control plane network element (for example, the SMF) in any one of the embodiments shown in FIG. 2 to FIG. 6.

It should be understood that a specific process in which the units perform the foregoing corresponding steps is described in detail in the foregoing method embodiments. For brevity, details are not described herein.

It should be further understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the first network element (for example, the UPF or the RAN) or the control plane network element (for example, the SMF) in the foregoing embodiments, and may be configured to perform procedures and/or steps corresponding to the first network element (for example, the UPF or the RAN) or the control plane network element (for example, the SMF) in the foregoing method embodiments. To avoid repetition, details are not described herein again.

The apparatus 700 in the foregoing solutions has a function of implementing corresponding steps performed by the first network element (for example, the UPF or the RAN) or the control plane network element (for example, the SMF) in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 710 may alternatively be a transceiver circuit (for example, the transceiver circuit may include a receiver circuit and a transmitter circuit), and the processing unit may be a processing circuit.

It should be noted that the apparatus in FIG. 7 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 8, an embodiment of this application provides a communication apparatus 800. The apparatus 800 includes a processor 810. The processor 810 is coupled to a memory 820. The memory 820 is configured to store a computer program or instructions and/or data. The processor 810 is configured to execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send a signal.

In a solution, the apparatus 800 is configured to implement operations performed by the first network element (for example, the UPF or the RAN) or the control plane network element (for example, the SMF) in the foregoing method embodiments.

For example, the processor 810 is configured to execute the computer program or the instructions stored in the memory 820, to implement related operations of the first network element (for example, the UPF or the RAN) in the foregoing method embodiments. For example, a method performed by the first network element (for example, the UPF or the RAN) in any one of the embodiments shown in FIG. 2 to FIG. 6 is performed.

It should be understood that, the processor in this embodiment of this application may be a central processing unit (central processing unit, CPU), or may further be another general-purpose processor, a digital signal processor (digital signal processor, DSP), an application specific integrated circuit (application specific integrated circuit, ASIC), a field programmable gate array (field programmable gate array, FPGA), or another programmable logic device, a discrete gate or transistor logic device, a discrete hardware component, or the like. A general purpose processor may be a microprocessor or the processor may be any conventional processor and the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

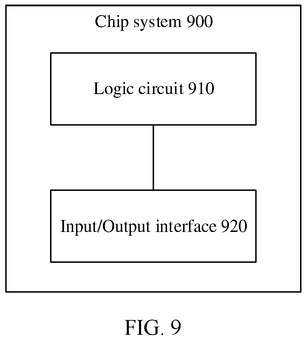

As shown in FIG. 9, an embodiment of this application provides a chip system 900. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement operations performed by the first network element (for example, the UPF or the RAN) or the control plane network element (for example, the SMF) in the foregoing method embodiments.

For example, the logic circuit 910 is configured to implement processing-related operations performed by the first network element (for example, the UPF or the RAN) in the foregoing method embodiments, and processing-related operations performed by the first network element (for example, the UPF or the RAN) in the embodiments shown in any one of FIG. 2 to FIG. 6. The input/output interface 920 is configured to implement sending and/or receiving-related operations performed by the first network element (for example, the UPF or the RAN) in the foregoing method embodiments and sending-and/or receiving-related operations performed by the first network element (for example, the UPF or the RAN) in the embodiments shown in any one of FIG. 2 to FIG. 6.

An embodiment of this application further provides a computer-readable storage medium. The computer-readable storage medium stores computer instructions used to implement the method performed by the first network element (for example, the UPF or the RAN) or the control plane network element (for example, the SMF) in the foregoing method embodiments.

For example, when the computer program is executed by a computer, the computer is enabled to implement the method performed by the first network element (for example, the UPF or the RAN) in the foregoing method embodiments.

An embodiment of this application further provides a computer program product, including instructions. When the instructions are executed by a computer, the method performed by the first network element (for example, the UPF or the RAN) or the control plane network element (for example, the SMF) in the foregoing method embodiments is implemented.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multiflow synchronization method, comprising:
obtaining, by a first network element, multiflow information and a first preset value, wherein the multiflow information comprises a first period, and the first network element is a radio access network device or a user plane function device; and
in the first period, if the first network element determines that an actual arrival time of a first data packet in a plurality of data flows is later than the first preset value, discarding, by the first network element, a data packet received in the first period.

2. The method according to claim 1, wherein the method further comprises:
in response to that the first network element determines that the actual arrival time of the first data packet in the plurality of data flows is later than the first preset value, sending, by the first network element, indication information to a transmit end device, wherein the indication information indicates to retransmit a data packet in each data flow in the plurality of data flows.

3. A multiflow synchronization method, comprising:
obtaining, by a first network element, multiflow information and a first preset value, wherein the multiflow information comprises a first period, and the first network element is a radio access network device or a user plane function device; and
in the first period, if the first network element determines that an actual arrival time of a first data packet in a plurality of data flows is later than the first preset value, sending, by the first network element, indication information to a transmit end device, wherein the indication information indicates to retransmit a data packet in each data flow in the plurality of data flows.

4. The method according to claim 2 or 3, wherein the sending, by the first network element, indication information to a transmit end device comprises:
generating, by the first network element, an acknowledgment data packet; and
sending, by the first network element, the acknowledgment data packet to the transmit end device, wherein the acknowledgment data packet is used to indicate to retransmit the data packet in each data flow in the plurality of data flows.

5. The method according to any one of claims 1 to 4, wherein the method further comprises:
determining, by the first network element, that the actual arrival time of the first data packet is earlier than or equal to the first preset value, and buffering, by the first network element, the first data packet.

6. The method according to any one of claims 1 to 5, wherein
the first preset value is a predetermined arrival time of the first data packet; or
the first preset value is a sum of an actual arrival time of a data packet in at least one data flow in the plurality of data flows and a preset time interval between arrival times of two data packets in the plurality of data flows.

7. The method according to any one of claims 1 to 6, wherein the multiflow information further comprises a size of the data packet in each data flow in the plurality of data flows and a predetermined arrival time of the data packet in each data flow in the plurality of data flows; and
before the first network element determines the actual arrival time of the first data packet in the plurality of data flows, the method further comprises:
pre-allocating, by the first network element, a resource to the data packet in each data flow in the plurality of data flows based on the multiflow information.

8. The method according to any one of claims 1 to 7, wherein the obtaining, by a first network element, multiflow information comprises:
obtaining, by the first network element, the multiflow information from any one or more of the following: a control plane network element, the user plane function device, and the radio access network device.

9. A communication apparatus, comprising a transceiver unit and a processing unit, wherein
the transceiver unit is configured to obtain multiflow information and a first preset value, the multiflow information comprises a first period, and the apparatus is a radio access network device or a user plane function device; and
in the first period, if the processing unit is configured to determine that an actual arrival time of a first data packet in a plurality of data flows is later than the first preset value, the transceiver unit is configured to discard a data packet received in the first period.

10. The apparatus according to claim 9, wherein the apparatus further comprises:
in response to that the processing unit is configured to determine that the actual arrival time of the first data packet in the plurality of data flows is later than the first preset value, the transceiver unit is configured to send indication information to a transmit end device, wherein the indication information indicates to retransmit a data packet in each data flow in the plurality of data flows.

11. A communication apparatus, comprising a transceiver unit and a processing unit, wherein
the transceiver unit is configured to obtain multiflow information and a first preset value, the multiflow information comprises a first period, and the apparatus is a radio access network device or a user plane function device; and
in the first period, if the processing unit is configured to determine that an actual arrival time of a first data packet in a plurality of data flows is later than the first preset value, the transceiver unit is configured to send indication information to a transmit end device, wherein the indication information indicates to retransmit a data packet in each data flow in the plurality of data flows.

12. The apparatus according to claim 10 or 11, wherein that the transceiver unit is configured to send indication information to a transmit end device comprises:
the processing unit is configured to generate an acknowledgment data packet; and
the transceiver unit is configured to send the acknowledgment data packet to the transmit end device, wherein the acknowledgment data packet is used to indicate to retransmit the data packet in each data flow in the plurality of data flows.

13. The apparatus according to any one of claims 9 to 12, wherein the apparatus further comprises:
the apparatus determines that the actual arrival time of the first data packet is earlier than or equal to the first preset value, and the processing unit is configured to buffer the first data packet.

14. The apparatus according to any one of claims 9 to 13, wherein
the first preset value is a predetermined arrival time of the first data packet; or
the first preset value is a sum of an actual arrival time of a data packet in at least one data flow in the plurality of data flows and a preset time interval between arrival times of two data packets in the plurality of data flows.

15. The apparatus according to any one of claims 9 to 14, wherein the multiflow information further comprises a size of the data packet in each data flow in the plurality of data flows and a predetermined arrival time of the data packet in each data flow in the plurality of data flows; and
before that the processing unit is configured to determine the actual arrival time of the first data packet in the plurality of data flows, the apparatus further comprises:
the processing unit is configured to pre-allocate a resource to the data packet in each data flow in the plurality of data flows based on the multiflow information.

16. The apparatus according to any one of claims 9 to 15, wherein that the transceiver unit is configured to obtain multiflow information comprises:
the transceiver unit is configured to obtain the multiflow information from any one or more of the following: a control plane network element, the user plane function device, and the radio access network device.

17. A communication apparatus, comprising:
a processor, configured to execute a computer program stored in a memory, so that the apparatus performs the method according to any one of claims 1 and 2 and 4 to 8, or the apparatus performs the method according to any one of claims 3 to 8.

18. The apparatus according to claim 17, wherein the apparatus further comprises the memory.

19. A computer-readable storage medium, wherein the computer-readable storage medium stores a computer program, and when the computer program is run on a computer, the computer performs the method according to any one of claims 1 and 2 and 4 to 8, or the computer performs the method according to any one of claims 3 to 8.

20. A computer program product, wherein the computer program product comprises instructions used to perform the method according to any one of claims 1 and 2 and 4 to 8, or the computer program product comprises instructions used to perform the method according to any one of claims 3 to 8.
